# EUROPÄISCHE PATENTSCHRIFT

(11) **EP 3 793 928 B1**
(45) Veröffentlichungstag und Bekanntmachung des Hinweises auf die Patenterteilung: **04.10.2023**
(21) Anmeldenummer: 19736331.0
(22) Anmeldetag: 28.06.2019
(51) Int. Cl.: B66C 15/00, B66B 7/12, B66D 1/54, D07B 1/14, G01N 21/952

(54) **VORRICHTUNG ZUM EINSTELLEN DER ABLEGEREIFEERFASSUNG HOCHFESTER FASERSEILE SOWIE HEBEZEUG MIT EINER SOLCHEN VORRICHTUNG**
DEVICE FOR SETTING THE DISCARDING CRITERIA DETECTION OF HIGH-STRENGTH FIBER ROPES, AND HOISTING GEAR HAVING SUCH A DEVICE
DISPOSITIF POUR RÉGLER LA DÉTECTION DE L'ÉTAT D'USURE DE CÂBLES EN FIBRES ULTRA-RÉSISTANTS NÉCESSITANT UN REMPLACEMENT, ET ENGIN DE LEVAGE DOTÉ D'UN TEL DISPOSITIF

(30) Priorität: 28.06.2018 DE 102018115662; 26.09.2018 DE 102018123758
(43) Veröffentlichungstag der Anmeldung: 24.03.2021
(73) Patentinhaber: Liebherr-Components Biberach GmbH, 88400 Biberach/Riss (DE)
(72) Erfinder: MUPENDE, Yvon Ilaka, 89231 Neu-Ulm (DE); HAMME, Ulrich, 89584 Ehingen (DE); LUKASCH, Felix, 89604 Allmendingen (DE)
(74) Vertreter: Thoma, Michael
(86) Internationale Anmeldenummer: PCT/EP2019/067356
(87) Internationale Veröffentlichungsnummer: WO 2020/002615

(56) Entgegenhaltungen:
- WO-A1-2012/010431
- WO-A1-2017/067651
- US-A1- 2003 052 695

## Beschreibung

Die vorliegende Erfindung betrifft allgemein die Erkennung der Ablegereife von hochfesten Faserseilen. Die Erfindung betrifft dabei einerseits eine Vorrichtung zum Erkennen der Ablegereife hochfester Faserseile für verschiedene Einsatzbedingungen, wobei ein Seilkern des Faserseils mit einem Seilmantel ummantelt ist, der bestimmungsgemäß schneller verschleißt als der Seilkern, mit einer optischen Erfassungseinrichtung zum Erfassen der Seiloberfläche und/oder einem Lastkollektivzähler zum Erfassen der Lastspiele, denen das Faserseil unterworfen wird, sowie andererseits ein Hebezeug insbesondere in Form eines Turmdrehkrans oder Teleskopauslegerkrans mit einer solchen Vorrichtung zum Erkennen der Ablegereife.

Seit geraumer Zeit wird in der Hebetechnik und insbesondere bei Kranen versucht, die üblichen, schweren Stahlseile durch hochfeste Faserseile zu ersetzen, die aus hochfesten Kunstfasern wie beispielsweise Aramidfasern, Aramid- /Kohlefasergemischen, hochmodularen Polyethylenfasern (HMPE), Füssigkristallpolymer (Liquid Cristal Polymer / LCP) - Vectran oder Poly(p-phenylene-2,6-benzobisoxazole)-Fasern (PBO) bestehen oder zumindest derartige Fasern aufweisen. Durch die Gewichtsersparnis gegenüber Stahlseilen von bis zu 80% bei annähernd gleicher Bruchfestigkeit kann die Traglast bzw. die zulässige Hublast erhöht werden, da das für die Traglast zu berücksichtigende Eigengewicht des Seils deutlich geringer ist. Gerade bei Kranen mit großer Hubhöhe, oder in Auslegern oder Mastverstellwerken mit Flaschenzügen hoher Einscherungszahl kommen beträchtliche Seillängen und damit auch ein entsprechendes Seilgewicht zustande, sodass die durch hochfeste Faserseile mögliche Gewichtsreduzierung sehr vorteilhaft ist. Zusätzlich zum Gewichtsvorteil des Faserseiles selbst kommt hinzu, dass die Verwendung von Faserseilen auch eine Gewichtsersparnis bei weiteren Komponenten ermöglicht. Beispielsweise kann der Lasthaken leichter ausgeführt werden, da zur Seilspannung eines Faserseils weniger Lasthakengewicht notwendig ist. Zum anderen erlaubt die gute Biegsamkeit von Synthetikfaserseilen kleinere Biegeradien und damit kleinere Seilscheiben bzw. - rollen am Kran, was zu einer weiteren Gewichtsreduzierung insbesondere im Bereich von Kranauslegern führt, sodass bei großen Kranausladungen eine erhebliche Lastmomentsteigerung erreicht werden kann.

Zusätzlich zu den genannten Gewichtsvorteilen zeichnen sich Seiltriebe mit Kunstfaserseilen durch eine beträchtlich größere Lebensdauer, leichtes Hantieren und gute Biegsamkeit sowie die nicht mehr notwendige Seilschmierung aus. Insgesamt kann hierdurch eine größere Geräteverfügbarkeit erzielt werden.

Eine Schwierigkeit bei solchen hochfesten Faserseilen besteht jedoch darin, deren Ablegereife präzise und verlässlich vorherzusagen bzw. zu bestimmen. Hochfeste Faserseile sind wie Stahlseile Verschleißteile, die ausgetauscht werden müssen, wenn sich ihr Zustand soweit verschlechtert hat, dass bei weiterem Betrieb die erforderliche Sicherheit nicht mehr gegeben ist. Diesen Zustand bezeichnet man allgemein als Ablegereife.

Bei herkömmlichen Stahlseilen ist die Ablegereife in an sich recht einfacher Weise durch Inaugenscheinnahme des Seilzustandes ermittelbar, wobei die Vorgehensweise bei der Prüfung und der Prüfungsumfang in der Norm ISO 4309 vorgegeben wird. Im Wesentlichen wird dabei auf die Anzahl der Drahtbrüche über eine bestimmte Messlänge des Seiles, eine Verringerung des Seildurchmessers sowie auf Litzenbrüche abgestellt. Diese Messmethode ist jedoch zur Erkennung der Ablegereife bei hochfesten Faserseilen nicht möglich, da sich die verwendeten Synthetikfasern nicht so verhalten wie Drahtlitzen.

Aus der Schrift DE 20 2009 014 031 U1 ist ein hochfestes Faserseil aus Synthetikfasern bekannt, bei dem ein Seilkern mit einer Ummantelung versehen wird, die anders eingefärbt ist als der Seilkern und selbst wiederum verschiedene Mantelschichten unterschiedlicher Farbe besitzt. Durch diese verschiedenfarbige Einfärbung soll es leichter erkennbar sein, wenn durch Abrieb einer äußeren Schicht eine andersfarbige, darunterliegende Schicht oder gar der Seilkern zum Vorschein kommt. In der Praxis leidet diese an sich sinnvolle Farbindikatorfunktion jedoch daran, dass die Ummantelung aufgrund der Eigenschaften hochfester Synthetikfasern dazu neigt, insgesamt recht schlagartig zu versagen, sodass es wiederum schwierig ist, die Ablegereife des Seils rechtzeitig zu bestimmen oder vorhersagen zu können.

Aus der EP 3 180 472 B1 ist es ferner bekannt, hochfeste Faserseile mit einer Kamera zu überwachen und die Bilder des Faserseils mit Referenzbildern, die in einem Speicher abgelegt sind und charakteristische Schädigungen zeigen, zu vergleichen, um anhand des Bildvergleichs den aktuellen Schädigungs- und Verschleißgrad der Ummantelung und hieraus dann die Ablegereife zu bestimmen.

Auch wenn die Erfassung des Seilmantelverschleißes per se an sich vernünftig und verlässlich machbar ist, besteht in der Praxis das Problem, dass ein bestimmter Seilmantelverschleiß bei synthetischen Faserseilen nicht immer in gleichem Maße mit dem tatsächlichen Grad der Ablegereife korrespondiert, da die Ablegereife durch verschiedene Betriebsbedingungen und vielerlei Einsatzparameter unterschiedlich beeinflusst wird und Seilmantel und Seilkern nicht immer gleich beeinträchtigen.

Aus der Schrift WO 2017/067651 A1 ist eine Vorrichtung zum Erkennen der Ablegereife eines hochfesten Faserseils bekannt, die aktuelle Bilder des Seilmantels einem optischen Vergleich mit gespeicherten Referenzdarstellungen unterzieht, wobei unter anderem ein Farbmuster bzw. -pixelmuster des Seilmantels im aktuellen Bild mit den Referenzdarstellungen verglichen wird, um auf den Verschleißzustand rückzuschließen. Dieses Dokument offenbart den Oberbegriff von Anspruch 1.

Ferner zeigt die Schrift WO 2012/010431 A1 eine Prüfvorrichtung für Aufzugsanlagen, die das Tragseil mit einer elektromagnetischen Strahlung beaufschlagt und das Transmissions- bzw. Reflexionsmuster erfasst und mit gespeicherten Mustern abgleicht, um den Verschleißzustand zu bestimmen.

Es wurde insofern bereits angedacht, den Seilmantel durch unterschiedlich verschleißfeste Fasern, unterschiedlichen Mantelaufbau oder -dicke an verschiedene Einsatzbedingungen anzupassen, und sich nicht allein auf eine optische Prüfung des Seilmantels zu verlassen, sondern für die Ablegereife-Erkennung andere Kriterien heranzuziehen, vgl. bspw. EP 3 392 404 A. Beides ist jedoch nicht ohne weiteres möglich bzw. mit beträchtlichen Schwierigkeiten und Beeinträchtigungen behaftet.

Zum einen ist der Seilmantel nämlich regelmäßig kein reiner Verschleißindikator, der frei gestaltbar und insofern fein an verschiedene Verschleißbedingungen anpassbar wäre, sondern ein integraler Bestandteil des Seils, der den Seilkern hinsichtlich Tragfähigkeit unterstützt und schützt.

Nicht ummantelte Seile besonders in geflochtener Konstruktion haben prinzipiell eine geringe Stabilität, die sich nachteilig in der Mehrlagenwicklung auf der Trommel auswirkt.

Der Verschleiß des Seiles und dessen Ummantelung wird durch den Seiltrieb, d.h. durch die Biegewechsel im Seilverlauf über Seilrollen und die Seilreibung auf der Trommel beim Spulen hervorgerufen, speziell bei der Mehrlagenwicklung. Dabei spricht man von einem systembedingten Verschleiß.

Der Verschleiß der Ummantelung wird durch unterschiedliche Parameter beeinflusst, z.B.:
> durch die Stärke der Ummantelung,
> durch die Anzahl der Mantelschichten 1 bis n,
> durch unterschiedliche Werkstoffe der Fasern von Mantelschicht zu Mantelschicht,
> durch die Mischung unterschiedlicher Faserwerkstoffe je Mantelschicht, die aber aufgrund der weiteren Aufgaben des Mantels nicht frei gestaltbar sind,
> durch einen unterschiedlichen konstruktiven Aufbau der Mantelschichten bei Einsatz gleicher Faserwerkstoffe.

Es wurde insofern bereits versucht, weitere Kriterien über das optische Schadensbild der Seilummantelung hinaus für die Ablegereife bzw. deren Bestimmung heranzuziehen. Beispielsweise wurden hier Vorrichtungen vorgeschlagen, die eine Verkleinerung des Seildurchmessers überwachen, eine Längung des Seiles abschnittsweise und insgesamt bestimmten, eine Buckelbildung erfassen und mit jeweiligen Grenzwerten vergleichen. Vor allen Dingen wurde auch bereits vorgeschlagen, die zulässigen Lastspiele auch in Abhängigkeit der Einsatztemperatur zu überwachen und hierfür einen Lastkollektivzähler vorzusehen. Hierbei werden die Biegewechsel, die das Faserseil erfährt, gezählt, wobei ein Algorithmus entwickelt wurde, der die Biegewechsel abhängig von den Betriebs- und Konstruktionsdaten berechnen kann. Allerdings ergeben sich auch bei einer solchen Lastspielüberwachung verschiedene Schwierigkeiten, beispielsweise dahingehend, dass der Lastspielzähler nicht alle tatsächlich relevanten Einflüsse auf die Lebensdauer mit überwachen kann, beispielsweise die Sand- und Staubmenge, chemische Beaufschlagung des Seils durch Abluftwolken und dergleichen, oder auch nur ganz praktische Unwägbarkeiten wie nicht gezählte, zusätzliche Lastspiele durch Verwendung des Seils auf einem anderen Windenwerk.

Der vorliegenden Erfindung liegt daher die Aufgabe zugrunde, ein verbessertes Verfahren zum Einstellen der optischen Erfassbarkeit der Ablegereife hochfester Faserseile, eine verbesserte Vorrichtung zum Erkennen der Ablegereife hochfester Faserseile sowie einen verbesserten hochfesten Faserseilsatz mit besserer Erkennbarkeit der Ablegereife zu schaffen.

Erfindungsgemäß wird die genannte Aufgabe durch eine Vorrichtung gemäß Anspruch 1 sowie ein Hebezeug gemäß Anspruch 5 gelöst. Bevorzugte Ausgestaltungen der Erfindung sind Gegenstand der abhängigen Ansprüche.

Es wird also vorgeschlagen, den Seilmantel hinsichtlich seiner Sonnen- bzw. Tageslichtabsorption und/oder -reflexion unterschiedlich auszubilden, um die Verschleißfestigkeit bzw. -geschwindigkeit des Seilmantels einzustellen und an verschiedene Einsatzbedingungen anzupassen, sowie die Arbeitsweise einer automatischen Vorrichtung zur Bestimmung der Ablegereife in Abhängigkeit eines erfaßten Tageslichtabsorption- und/oder -reflexionsgrads anzupassen. Die entsprechende Vorrichtung zur Bestimmung der Ablegereife umfaßt insbesondere optische Erfassungsmittel, insbesondere eine bildgebende Sensorik beispielsweise umfassend eine Kamera, mittels derer Bilder des hochfesten Faserseils gemacht und mit Referenzbildern, die in einem Referenzspeicher abgelegt sein können, verglichen werden können.

Vorteilhafterweise ist eine solche Vorrichtung selbstanpassend arbeitend ausgebildet, um die Einstellung des Seilmantels hinsichtlich seines Lichtabsorptionsgrades und/oder seines Reflexionsgrades zu berücksichtigen. Insbesondere kann die Vorrichtung Erfassungsmittel zum Erfassen und/oder Bestimmen des Lichtabsorptionskoeffizienten und/oder des Reflexionsgrads des Seilmantels aufweisen, wobei eine Voreinstell-Einrichtung vorgesehen und dazu ausgebildet sein kann, den Auswertealgorithmus zur Bestimmung der Ablegereife anhand der erfassten Seilparameter wie Schädigungsmuster anhand des Bildvergleiches und/oder erfasstes Lastkollektiv und/oder erfasste Lastspielzahl automatisch in Abhängigkeit des bestimmten Lichtabsorptionskoeffizienten und/oder des bestimmten Reflexionsgrades anzupassen bzw. zu verändern.

Eine solche Anpassvorrichtung macht es sich zunutze, dass der Seilmantel des Seils bei Bestimmung des Seils für verschleißintensivere Bedingungen mit einem höheren Tageslichtabsorptionskoeffizienten und/oder einem niedrigeren Reflexionsgrad versehen ist als bei Bestimmung des Seils für verschleißärmere Einsatzbedingungen. Je nach bestimmungsgemäßem Arbeitskollektiv ist der Seilmantel hinsichtlich seines Verhaltens bei Sonnenlichtbeaufschlagung unterschiedlich ausgebildet, um das Verhältnis der Verschleißgeschwindigkeit des Seilmantels zur Ermüdungsgeschwindigkeit des Seilkerns zu verändern und an das bestimmungsgemäße Arbeitskollektiv anzupassen. Durch einen hohen Lichtabsorptionskoeffizienten beispielsweise durch lichtabsorbierende Partikel im Seilmantel und/oder einen niedrigen Reflexionsgrad des Seilmantels beispielsweise durch wenige oder keine lichtreflektierende Partikel am Seilmantel heizt sich dieser bei Tageslichtbestrahlung relativ stark auf, so dass der Seilmantel aufgrund höherer Betriebstemperaturen schneller verschleißt. Umgekehrt können erhöhte Betriebstemperaturen des Seilmantels und damit erhöhte Verschleißgeschwindigkeiten des Seilmantels vermieden werden, wenn der Seilmantel einen niedrigen Tageslichtabsorptionskoeffizienten und/oder einen hohen Reflexionsgrad aufweist.

Durch die Einstellung der Verschleißgeschwindigkeit des Seilmantels durch Variation von dessen Lichtabsorptionsfähigkeit kann ein Seil für verschiedene Einsatzbedingungen und Lastkollektive konfiguriert werden, ohne hierfür die wesentlichen Konstruktionscharakteristika der Seilkonstruktion verändern oder anpassen zu müssen. Insbesondere kann ein Seilsatz geschaffen werden, der mehrere hochfeste Faserseile umfasst, die einander hinsichtlich Seildurchmesser, maximaler Seiltraglast und -zugfestigkeit bspw. im Sinne von Seilbruchlast oder maximaler Strangzuglast, Kerndurchmesser und Manteldicke, Fasermaterial, Faserbündel- und Litzenzahl, und Faserbündelaufbau wie beispielsweise Flechtenmuster, einander entsprechen und insofern einander vergleichbare mechanische Eigenschaften haben. Allerdings sind die Seilmäntel hinsichtlich des Lichtabsorptionskoeffizienten unterschiedlich eingestellt, so dass der Seilmantel trotz ansonsten gleichen Aufbaus unterschiedlich schnell verschleißt.

Hierdurch können nicht nur Fertigungskosten und -abläufe reduziert und vereinfacht werden, sondern auch der Seilmantel an sich optimal für seine anderen Aufgaben wie Unterstützung und Schutz des Seilkerns, Beitrag zur Seilfestigkeit, etc. ausgebildet werden. Vor allen Dingen aber kann auf die optische Erfassung der am Seilmantel eintretenden Schädigungen und eine hieraus abgeleitete Bestimmung der Ablegereife vertraut werden, da die Verschleißgeschwindigkeit an das jeweilige Lastkollektiv und die jeweiligen Einsatzbedingungen angepasst werden kann und der Verschleiß des Seilmantels tatsächlich mit der Ablegereife korreliert.

Der Tageslichtabsorptionskoeffizient kann dabei in verschiedener Weise variabel eingestellt werden. Grundsätzlich wäre es möglich, eine Oberflächenbeschichtung des Seilmantels vorzusehen, die hinsichtlich ihres Reflexionsgrads und/oder ihres Transmissionsgrads variabel bzw. verschieden ausgebildet ist, je nachdem, welche Verschleißgeschwindigkeit des Seilmantels für das jeweilige Arbeitskollektiv bzw. die jeweiligen Einsatzbedingungen benötigt wird. Je nachdem, wieviel Tageslicht durch eine solche Oberflächenbeschichtung in den eigentlichen Seilmantel eindringen kann, wird dessen Verschleißgeschwindigkeit erhöht oder reduziert.

Um allerdings dem starken mechanischen Verschleiß einer solchen Oberflächenbeschichtung zu entgehen bzw. einen solchen unschädlich zu machen, kann in vorteilhafter Weiterbildung der Erfindung der Absorptionskoeffizient des Seilmantels durch Einfärben von Fasern und/oder Faserbündeln des Seilmantels mit schwarzen und/oder weißen und/oder verschieden bunten oder verschieden grauen Pigmenten eingestellt werden. Durch in die Fasern oder Faserbündeln und/oder zwischen Faserbündel eingebettete Pigmente verschiedener Farbe bzw. Helligkeit kann eine dauerhafte Einstellung des Absorptionskoeffizienten erzielt werden, so dass die Tageslichtbeaufschlagung dauerhaft den gleich bleibenden, gewünschten Effekt auf die Verschleißgeschwindigkeit des Seilmantels hat.

Insbesondere kann der Seilmantel für verschleißintensivere Einsatzbedingungen und/oder verschleißfördernde Lastkollektive dunkler ausgebildet und für verschleißärmere Einsatzbedingungen und/oder verschleißärmere Lastkollektive vergleichsweise heller ausgebildet werden. Durch eine dunklere Mantelausbildung heizt sich der Seilmantel im Tageslicht stärker auf und verschleißt dementsprechend schneller, während ein hellerer Seilmantel weniger Aufheizung erfährt und dementsprechend langsamer altert bzw. verschleißt.

Alternativ oder zusätzlich zu der Beimischung von lichtabsorbierenden Partikeln oder Farbpigmenten, die den Lichtabsorptionskoeffizienten verändern, kann den Fasern und/oder Faserbündeln des Seilmantels auch ein UV-Schutz-Mittel in unterschiedlichem Maße oder unterschiedlicher Stärke zugegeben werden, um die UV-Lichtbeständigkeit des Seilmantels zu erhöhen oder durch geringere oder Nicht-Beimischung zu verkürzen, um auf diesem Wege die Verschleißgeschwindigkeit des Seilmantels an verschiedene Lastkollektive anpassen zu können. Für schwerere Lastkollektive kann ein stärkerer UV-Schutz und für leichtere Lastkollektive ein geringerer UV-Schutz vorgesehen oder umgekehrt für schwerere Lastkollektive kann ein schächerer UV-Schutz und für leichtere Lastkollektive ein stärkerer UV-Schutz vorgesehen werden, wobei ein solcher UV-Schutz beispielsweise durch Imprägnieren der Fasern und/oder Faserbündel des Seilmantels mit einem entsprechenden UV-Schutzmittel erfolgen kann.

Die Tageslichtabsorptionskoeffizienten der Seilmäntel eines Seilsatzes können grundsätzlich verschieden weit voneinander beabstandet werden, wobei der Lichtabsorptionskoeffizient grundsätzlich zwischen 0 und 1, d.h. gar keiner und maximaler Lichtabsorption variieren kann. Für ein Seil, das für ein schweres Lastkollektiv bestimmt ist, bei dem die zu erwartende Lebensdauer des Seils 50% oder weniger der maximalen Lebensdauer bei einem leichten Lastkollektiv beträgt, kann der genannte Tageslichtabsorptionskoeffizient vorteilhafterweise größer als 0,6 oder auch größer als 0,75 eingestellt sein, beispielsweise indem entsprechend viele schwarze Partikel bzw. Pigmente oder andere Lichtabsorptionspigmente in dem Seilmantel und/oder dessen Fasern und/oder Faserbündeln eingebettet sind. Ist das Seil indes für ein leichtes Lastkollektiv zu konfigurieren, kann der Seilmantel mit einem Lichtabsorptionskoeffizienten von 0,4 oder kleiner oder auch 0,3 oder kleiner ausgebildet werden. Für mittelschwere Lastkollektive, bei denen die zu erwartende Lebensdauer zwischen 40% und 80% oder 50% bis 70% der maximalen Lebensdauer beträgt, kann der Lichtabsorptionskoeffizient vorteilhafterweise auf einen Wert zwischen 0,4 und 0,6 eingestellt werden.

Die genannte maximale Lebensdauer kann dabei empirisch bestimmt werden und/oder die Lebensdauer meinen, die bei sehr günstigen äußeren Bedingungen und geringen, leichten Lastkollektiven, die nicht an die maximale Tragfähigkeit des Seils herangehen oder dies nur selten tun, erreicht wird. Beispielsweise kann dies die Lebensdauer sein, die das Seil bei Beaufschlagung mit einem Lastkollektiv erreicht, welches Lastkollektiv im Wöhler-Schwingfestigkeitsversuch das Erreichen der Wöhlerschen Dauerfestigkeit ermöglicht.

Grundsätzlich ermöglicht eine Einstellung der Verschleißgeschwindigkeit des Seilmantels durch Variation dessen Lichtempfindlichkeit eine Prüfung und Überwachung der Ablegereife durch optische Inaugenscheinnahme beispielsweise durch den Maschinenführer oder eine entsprechend geschulte Kontrollperson.

Vorteilhafterweise kann aber auch eine automatisierte, maschinelle Überwachung und Bestimmung der Ablegereife durchgeführt werden, wobei die entsprechende Vorrichtung zur Bestimmung der Ablegereife wie zuvor schon erwähnt insbesondere optische Erfassungsmittel, insbesondere eine bildgebende Sensorik beispielsweise umfassend eine Kamera aufweisen kann, mittels derer Bilder des hochfesten Faserseils gemacht und mit Referenzbildern, die in einem Referenzspeicher abgelegt sein können, vergleichen kann. Alternativ oder zusätzlich kann die Vorrichtung aber auch einen Lastkollektivzähler umfassen, der die Lastspiele zählt, denen das hochfeste Faserseil unterworfen wird, und ggf. dabei weitere, relevante Lastspielparameter wie Seilgeschwindigkeit, Seillast und Umlenkradius erfasst und ein entsprechendes Lastkollektiv bestimmt.

Vorteilhafterweise ist eine solche Vorrichtung selbstanpassend arbeitend ausgebildet, um die Einstellung des Seilmantels hinsichtlich seines Lichtabsorptionsgrades und/oder seines Reflexionsgrades zu berücksichtigen. Erfindungsgemäß weißt die Vorrichtung Erfassungsmittel zum Erfassen und/oder Bestimmen des Lichtabsorptionskoeffizienten und/oder des Reflexionsgrads des Seilmantels auf, wobei eine Voreinstell-Einrichtung den Auswertealgorithmus zur Bestimmung der Ablegereife anhand der erfassten Seilparameter wie Schädigungsmuster anhand des Bildvergleiches und/oder erfasstes Lastkollektiv und/oder erfasste Lastspielzahl automatisch in Abhängigkeit des bestimmten Lichtabsorptionskoeffizienten und/oder des bestimmten Reflexionsgrades anpassen bzw. verändern kann. Beispielsweise kann die Ablegereife-Bestimmungseinrichtung die Ablegereife anhand der erfassten Biegewechsel des Seils und der bestimmten Schädigungsmuster auf Basis eines Algorithmus bestimmen, der von der Voreinstelleinrichtung in der genannten Weise abgeändert wird.

Stellt die genannte Erfassungseinrichtung zum Erfassen des Lichtabsorptionsgrades beispielsweise fest, dass ein hochfestes Faserseil mit dunklem Seilmantel, beispielsweise einem Seilmantel aus der dunkelsten Kategorie, verwendet wird und/oder der erfasste Lichtabsorptionskoeffizienten einen vorbestimmten Schwellwert überschreitet, kann die Voreinstell- und/oder Anpasseinrichtung den Algorithmus dahingehend anpassen, dass bereits beim Feststellen geringerer Schädigungsbilder und/oder bei Erreichen einer geringeren Lastspielzahl ein Ablegereifesignal ausgegeben wird.

Allgemein kann die Anpassvorrichtung dazu ausgebildet sein, bei Bestimmung eines dunkler ausgebildeten Seilmantels (2) eine niedrigere kritische Lastspielzahl einzustellen und bei Bestimmung eines heller ausgebildeten Seilmantels (2) eine höhere kritische Lastspielzahl einzustellen.

Stellt die Erfassungseinrichtung umgekehrt einen kleineren Lichtabsorptionskoeffizienten und/oder einen höheren Reflexionsgrad am verwendeten Seil fest, kann der Algorithmus zum Bestimmen der Ablegereife dahingehend umkonfiguriert bzw. angepasst werden, dass erst bei Erreichen einer größeren Lastspielzahl und/oder Feststellen eines Schädigungsbildes mit größeren Schädigungen ein Ablegereifesignal bereitgestellt wird.

Die Anpassvorrichtung ist erfindungsgemäß dazu ausgebildet, die kritische Lastspielzahl, bei deren Erreichen ein Ablegereifesignal abgegeben wird, in Abhängigkeit des erfassten Lichtabsorptionskoeffizienten und/oder des erfassten Reflexionsgrads abzuändern derart, dass bei einem höheren Lichtabsorptionsgrad die kritische Lastspielzahl niedriger eingestellt wird als bei einem vergleichsweise niedrigeren Lichtabsorptionskoeffizienten.

Unabhängig von der konkreten Ausbildung der Anpassvorrichtung kann die Erfassungseinrichtung dazu ausgebildet sein, schwarze und/oder weiße Pigmente und/oder andere Lichtabsorptionspigmente, mit denen Fasern und/oder Faserbündeln des Seilmantels eingefärbt sind, zu erfassen und/oder deren Menge zu bestimmen, und den Lichtabsorptionskoeffizienten und/oder Reflexionsgrads des Seilmantels anhand der erfassten schwarzen und/oder weißen Pigmenten und/oder anderen Lichtabsorptionspigmenten und/oder deren erfaßten Menge zu bestimmen.

Insbesondere kann die Anpassvorrichtung dazu ausgebildet sein, bei Bestimmung eines Lichtabsorptionskoeffizienten a > 0,6 oder a > 0,75 für ein schweres Lastkollektiv, bei dem das Faserseil eine Lebensdauer von weniger als 50% der maximalen Lebensdauer, die das Faserseil bei Beanspruchung mit einem in den Wöhlerschen Dauerfestigkeitsbereich führenden Lastkollektiv besitzt, die kritische Lastspielzahl auf weniger als 50% der Lastspielzahl, bei der der Dauerfestigkeitsbereich erreicht wird, festzusetzen und bei Bestimmung eines Lichtabsorptionskoeffizienten von < 0,4 oder < 0,3 für ein leichtes Lastkollektiv, bei dem das Seil eine Lebensdauer von mindestens 75% der maximalen Lebensdauer besitzt, die kritische Lastspielzahl auf 75% oder mehr der Lastspielzahl, bei der der Dauerfestigkeitsbereich erreicht wird, festzusetzen.

Das Hebezeug, in dem die Vorrichtung Verwendung ist insbesondere ein Kran, beispielsweise in Form eines Turmdrehkrans oder eines Mobilkrans wie bspw. eines Teleskopausleger-Krans ausgebildet sein, wobei zumindest ein Hubseil des Krans, an dem ein Lastaufnahmemittel wie Lasthaken angebracht ist, von dem hochfesten Faserseil gebildet sein kann. Das Hebezeug kann aber auch in Form anderer Krane wie bspw. eines Hafenkrans oder eines Schiffkrans oder in Form eines Lasten- oder Personenaufzugs oder eines anderen Personen- oder Lastenförderers wie bspw. einer Seilbahn oder eines Sessellifts ausgebildet sein.

Vorteilhafterweise kann das Hebezeug einen hochfesten Faserseilsatz umfassend eine Mehrzahl von hochfesten Faserseilen für verschiedene Einsatzbedingungen des Hebezeugs besitzen, wobei die Faserseile alle jeweils einen Seilkern und einen Seilmantel besitzen, der bestimmungsgemäß schneller verschleißt als der Seilkern, wobei die Faserseile ferner gleiche Seildurchmesser, gleiche Seilkerndurchmesser, gleiche Manteldicken, gleiche Faserbündelanordnungen, gleiche Fasermaterialien und eine gleiche Seilzugfestigkeit besitzen, wobei die Seilmäntel der Faserseile unterschiedliche Tageslichtabsorptionskoeffizienten besitzen, wobei ein für verschleißintensivere Einsatzbedingungen bestimmtes Faserseil einen Seilmantel mit höherem Tageslichtabsorptionskoeffizienten als ein für verschleißärmere Einsatzbedingungen bestimmtes Faserseil besitzt, und wobei die Anpassvorrichtung dazu ausgebildet ist, die kritische Lastspielzahl anhand des jeweils eingebauten Faserseils aus dem Faserseilsatz und des jeweils erfaßten Tageslichtabsorptionskoeffizienten einzustellen.

Die Erfindung wird nachfolgend anhand eines bevorzugten Ausführungsbeispiels und zugehöriger Zeichnungen näher erläutert. In den Zeichnungen zeigen:
- Fig. 1:: eine Darstellung eines Seilsatzes mit drei hochfesten Faserseilen mit unterschiedlichen Tageslichtabsorptionskoeffizienten und Helligkeits-/Dunkelheitsgraden und hierdurch implizierten, unterschiedlichen Verschleißgeschwindigkeiten,
- Fig. 2 und Fig. 3:: jeweils eine Seitenansicht eines hochfesten Faserseils mit einer geflochtenen Ummantelung, wobei in Fig. 2 der Seilmantel ohne Verschleißschäden und in Fig. 3 mit einer Schädigung dargestellt ist, und
- Fig. 4:: eine schematische Darstellung einer Vorrichtung zum Bestimmen der Ablegereife und deren Komponenten, die zur Bestimmung der Ablegereife eine optische Erfassung des Seilmantels und eine Lastspielzählung ermöglichen.

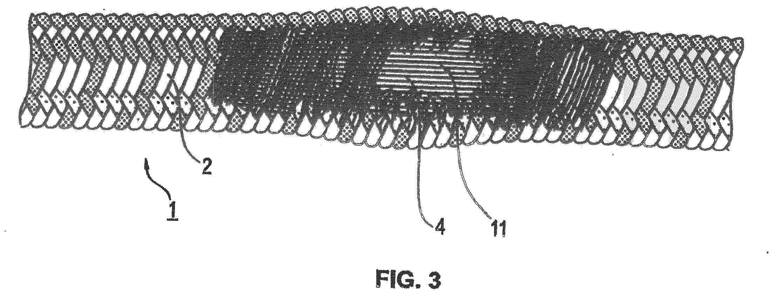

Wie beispielsweise die Fig. 3 zeigt, umfasst das hochfeste Faserseil einen Seilkern 11, der aus Litzen 4 geflochten oder geschlagen sein kann, die wiederum aus hochfesten Synthetikfasern bestehen oder zumindest solche hochfesten Synthetikfasern umfassen, beispielsweise Aramid-Fasern oder HPMA-Fasern, HMPE-Fasern oder andere der eingangs genannten Fasertypen, wobei der genannte Seilkern 11 aus Fasern eines Fasertyps oder Fasern verschiedener Fasertypen bestehen kann.

Die Ummantelung 2 umgibt den genannten Seilkern 11 und kann unmittelbar auf dem genannten Seilkern sitzen oder ggfs. durch eine Zwischenschicht hiervon beabstandet sein. Die genannte Ummantelung 2 kann insbesondere den Außenmantel des Seils 1 bilden. Der Seilkern 11 kann die gesamte angegebene Tragfestigkeit des Seils 1 übernehmen. Die Ummantelung 2 wirkt nur darüber hinaus unterstützend, insbesondere als Schutz für den Seilkern 11 und als Verschleißindikator.

Die genannte Ummantelung 2 kann hierbei aus einer einzigen Mantelschicht bestehen oder auch mehrere Mantelschichten umfassen, die übereinanderliegend angeordnet sind.

Wie die Figuren zeigen, kann die genannte Ummantelung 2 Litzen 3 umfassen, die miteinander zu der Ummantelung 2 geflochten sein und jeweils aus hochfesten Synthetikfasern bestehen können oder solche hochfesten Synthetikfasern zumindest aufweisen können.

Insbesondere können die genannten Litzen 3 der Ummantelung 2 aus unterschiedlichen Kunstfasern verschiedener Abrieb- und/oder Zugfestigkeit und/oder unterschiedlicher Werkstoffe gebildet sein.

In der Figur 3 ist ein Mantelverschleiß der Ummantelung 2 dargestellt, der beispielsweise durch den Seiltrieb bedingt sein kann, insbesondere die Umlenkung des Seils um Seilrolle, die Biegewechsel im Seilverlauf, die Seilreibung auf der Trommel beim Spulen und auch die Beanspruchung bei einer mehrlagigen Aufwicklung auf der Trommel, bei der die Seilabschnitte einer oberen Lage zwischen die Seilabschnitte einer unteren Lage einzuschneiden drohen.

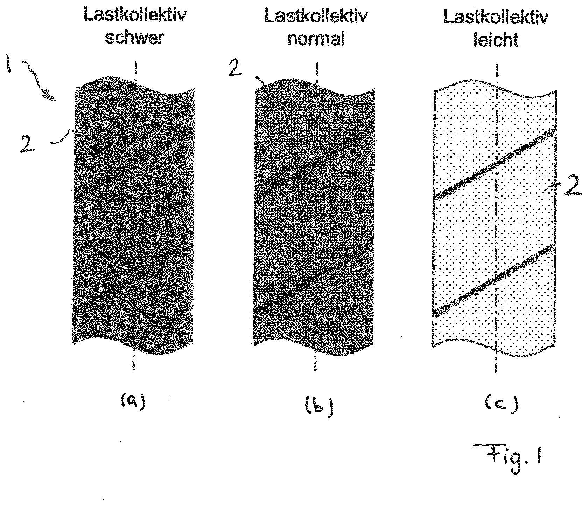

Fig. 1 zeigt das Seil 1 mit Ummantelung 2 und Litzen 3 der Ummantelung in unterschiedlichen Farben.

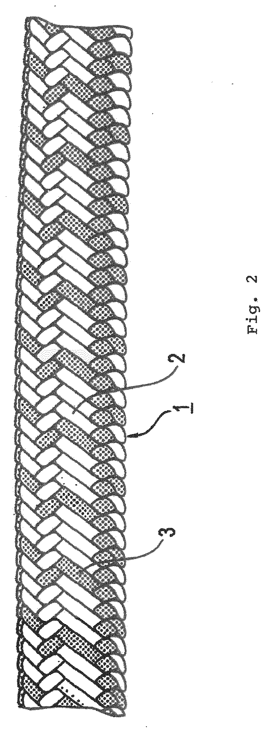

Fig. 2 zeigt das Seil 1 mit Ummantelung 2 noch ohne sichtbaren Verschleiß der einzelnen Litzen 3 des Mantels. Grad der gezeigten Schädigung < 5%.

Fig. 3 zeigt das Seil 1, dessen Ummantelung über einen Teilabschnitt von ca. 90° verschlissen ist und die Litzen 4 des tragenden Seiles sichtbar werden. Grad der gezeigten Schädigung ca. 50%.

Wie Fig. 1 zeigt, sind die Seilmäntel 2 verschiedener hochfester Faserseile unterschiedlich hell eingefärbt bzw. ausgebildet, um unterschiedliche Lichtabsorptionskoeffizienten des Seilmantels zu realisieren. Die Teilansicht (a) der Fig. 1 zeigt einen für schwere Lastkollektive dunkel eingefärbten Seilmantel, der einen Lichtabsorptionskoeffizienten von größer 0,8 besitzt und beispielsweise dunkelgrau bis schwarz ausgebildet sein kann, indem entsprechend viele schwarze Farbpigmente in den Faserbündeln oder den Fasern selbst eingelagert sind. Durch die entsprechend starke Aufheizung des Seilmantels bei Sonnenlichtbestrahlung und entsprechender Temperaturerhitzung des Seilmantels kann dieser beispielsweise dafür ausgelegt sein, nach 3 Jahren zu verschleißen, um die Ablegereife anzuzeigen.

Die Teilansicht (b) der Fig. 1 zeigt einen mittel-dunkel bzw. mittel-hell eingefärbten Seilmantel 2 des hochfesten Faserseils mit einem Lichtabsorptionskoeffizienten von 0,4 bis 0,7 und/oder einer mittelgrauen Farbe. Das hochfeste Faserseil mit einem solchen mittelhellen/mitteldunklen Seilmantel kann beispielsweise für ein normales Lastkollektiv dienen und mit dem Seilmantel bei ca. 5 Jahren verschleißen.

Die Teilansicht (c) der Fig. 1 zeigt schließlich ein Faserseil mit einem hellen Seilmantel, dessen Lichtabsorptionskoeffizient beispielsweise weniger als 0,4 betragen kann. Mit einem solchen hellen Seilmantel kann der Mantelverschleiß erst bei Erreichen von 8 bis 9 Jahren einsetzen bzw. ein Ausmaß erreichen, welches die Ablegereife anzeigt. Ein solches Seil kann bestimmungsgemäß für ein leichtes Lastkollektiv bestimmt sein.

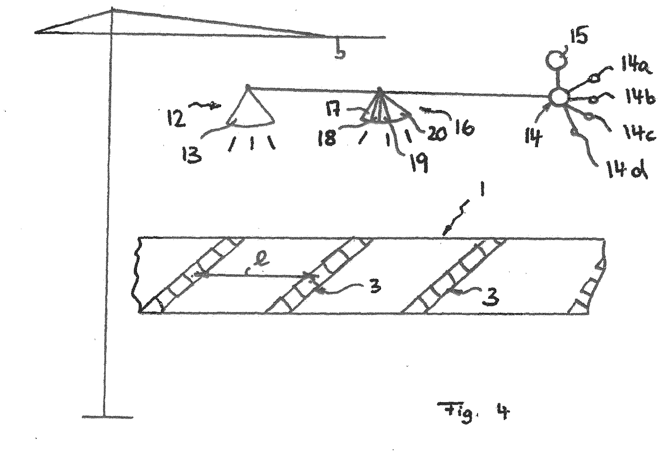

Fig. 4 zeigt eine Vorrichtung zur Bestimmung der Ablegereife näher. Insbesondere kann mittels einer optischen Erfassungseinrichtung 12, beispielsweise einer Kamera 13 ein Ist-Bild des Seils erfasst werden, welches dann mittels einer automatischen oder halbautomatischen Auswerteeinrichtung umfassend eine Bildauswerteeinrichtung 14 optisch mit den in einem Referenzbildspeicher 15 gespeicherten Referenzdarstellungen verglichen wird, um im Ist-Bild zu sehende Schädigungen zu erfassen und einzukategorisieren.

Die Auswerteeinrichtung kann dann die einzelnen Schädigungen in der eingangs genannten Weise aufsummieren und ggfs. eine Ablegereifesignal abgeben. Wie Fig. 4 zeigt, kann die genannte Vorrichtung zum Erkennen der Ablegereife kann in ein Hebezeug, insbesondere in einen Kran 21 und dessen Kransteuerung integriert sein.

Wie Fig. 4 zeigt, kann die Bildauswerteeinrichtung 14 Konturauswertemittel 14a umfassen, die Seilverdickungen durch Aufspleißungen des Verschleißmantels und/oder Verdünnungen in Bereichen, in denen der Seilmantel 2 verschlissen ist und/oder fehlt, und/oder andere Konturveränderungen wie Wellungen, die gegenüber dem Sollzustand der Seilkontur auftreten, bestimmen können.

Ferner kann die Bildauswerteeinrichtung 14 Farbmuster-Auswertemittel 14b umfassen, die anhand eines Bildvergleichs Veränderungen des Farbmusters, das das Seil im aufgenommenen Bild zeigt, bestimmen und daraus die Ablegereife ermitteln kann.

Weiterhin kann die genannte Bildauswerteeinrichtung 14 auch Farbflächenanteil-Auswertemittel 14c umfassen, die in einem erfassten Bild des Seils 1 den Flächenanteil einer jeweiligen Farbe bestimmen können, den die Farbe in der Gesamtfläche des Seils 1 einnimmt. Ist beispielsweise der Verschleißmantel 2 des Seils 1 schwarz-weiß-grau gestreift, wobei die Streifenbreiten gleich groß sind, so dass jede Farbe ein Drittel der Gesamtfläche einnimmt, können die genannten Farbflächenanteil-Auswertemittel 14c ein Verschleißen der weißen Fasern oder Litzen und eine damit einhergehende Schädigung des Seils 1 bestimmen, wenn der Flächenanteil der genannten weißen Fasern bzw. Litzen vom Sollwert 33% auf beispielsweise weniger als 25% oder weniger als 15% abnimmt.

Die genannten Farbflächenanteil-Auswertemittel 14c können auch das Auftreten einer neuen Farbe und deren Flächenanteil bestimmen. Tritt beispielsweise der andersfarbige Seilkern 11 durch Verschleißen des Verschleißmantels 2 zutage, können beispielsweise rote Flecken in dem vorgenannten schwarz-weiß-grauen Farbmuster auftreten, so dass die Farbflächenanteil-Auswertemittel 14c eine Schädigung bestimmen können, wenn der Flächenanteil der roten Flecken ein vorbestimmtes Maß überschreitet.

Die Bildauswerteeinrichtung 14 kann in vorteilhafter Weiterbildung der Erfindung auch Dehnungsauswertemittel 14d umfassen, die eine Dehnung ΔI des hochfesten Faserseils 1 und/oder dessen Verschleißmantels 2 anhand eines Vergleichs des aktuellen Seilbilds mit einem gespeicherten Referenzbild bestimmen können. Insbesondere können die genannten Dehnungsauswertemittel 14d die Beabstandung I vorbestimmer Farbmuster- und/oder Pixelmusterstellen in Längsrichtung des Faserseils 1 voneinander und/oder in Querrichtung des Faserseils voneinander identifizieren und bestimmen, vgl. Fig. 4, und mit einem Sollwert, der aus dem Bild des Faserseils im Ursprungszustand oder Sollzustand bestimmt werden kann, und/oder einem bekannten Verlauf vergleichen, um eine Dehnung des Seils in Längsrichtung und/oder Querrichtung bestimmen zu können. Ist beispielsweise das Seil 1, insbesondere dessen Verschleißmantel 2, mit roten oder andersfarbigen Litzen 3 versehen, die beispielsweise spiralförmig im Mantel 2 eingearbeitet sein können, haben diese roten Fasern bzw. Litzen im Bild des Faserseils 1 einen vorbestimmten Abstand I voneinander. Erfährt das Seil durch Alterung und/oder Schädigung eine übermäßige Dehnung, schlägt sich dies in einer entsprechenden Abstandsvergrößerung ΔI der roten Streifen nieder, anhand derer die Ablegereife bzw. Schädigung erkannt werden kann, vgl. Fig. 4.

Die Erfassungseinrichtung 12 zum Erfassen des Ist-Zustandes des hochfesten Faserseils 1 kann auch eine Sensorik 16 zum sensorischen Erfassen des Ist-Zustandes des Seilkerns 11 und/oder des Seilmantels 2 aufweisen, um ggf. alternativ oder zusätzlich zur optischen Erfassung des Zustands des Verschleißmantels 2 den Ist-Zustand des Seilkerns 11 und/oder des Seilmantels 2 in anderer Weise erfassen zu können. Diese Sensorik 16 kann vorteilhafterweise einen Lastkollektivzähler umfassen und/oder mehrere Parameter des Seilkerns 11 und/oder des Seilmantels 2 bestimmen, um bei vorbestimmten Veränderungen eines oder mehrerer Seilkern- und/oder Seilmantel-Parameter eine Schädigung anzunehmen.

Vorteilhafterweise passt sich die Vorrichtung hinsichtlich ihrer Bestimmung der Ablegereife selbst an das jeweils verwendete Seil und dessen Lichtabsorptionskoeffizienten an. Hierzu kann die genannte Erfassungseinrichtung 12 Erfassungsmittel zum Erfassen des Lichtabsorptionskoeffizienten des Seilmantels aufweisen, beispielsweise umfassend Kontrastbestimmungsmittel, die ein erfasstes Bild des Seilmantels hinsichtlich der Helligkeit des Seilmantels mit einem Referenzbild vergleichen und die Helligkeit/Dunkelheit des Seilmantels bestimmen.

Anhand der bestimmten Seilhelligkeit/-dunkelheit kann ein Adaptionsmodul der Bestimmungseinrichtung beispielsweise die kritische Lastspielzahl, bei deren Erreichen der Lastkollektivzähler das Ablegereifesignal angibt, verändern.

## Patentansprüche

1. Vorrichtung zum Bestimmen der Ablegereife eines hochfesten Faserseils (1), das einen Seilkern (11), der hochfeste Kunststofffasern oder -litzen (4) umfasst sowie einen den Seilkern (11) umgebenden, verschleißanzeigenden Seilmantel (2) besitzt, mit optischen Erfassungsmitteln (12) zum Erfassen des Schädigungsbildes des Seilmantels (2) und/oder einem Lastkollektivzähler zum Bestimmen der Lastspiele, denen das hochfeste Faserseil (1) unterworfen wird, und einer Erfassungseinrichtung zum Erfassen des Lichtabsorptionskoeffizienten und/oder des Reflexionsgrads des Seilmantels (2), **dadurch gekennzeichnet, dass** eine Anpassvorrichtung zum Anpassen des Algorithmus, mit Hilfe dessen die Ablegereife bestimmt wird, in Abhängigkeit des erfassten Lichtabsorptionskoeffizienten und/oder des erfassten Reflexionsgrads vorgesehen und dazu ausgebildet ist, die kritische Lastspielzahl, bei deren Erreichen ein Ablegereifesignal abgegeben wird, in Abhängigkeit des erfassten Lichtabsorptionskoeffizienten und/oder des erfassten Reflexionsgrads abzuändern derart, dass bei einem höheren Lichtabsorptionsgrad die kritische Lastspielzahl niedriger eingestellt wird als bei einem vergleichsweise niedrigeren Lichtabsorptionskoeffizienten.

2. Vorrichtung nach dem vorhergehenden Anspruch, wobei die Erfassungseinrichtung dazu ausgebildet ist, schwarze und/oder weiße Pigmente und/oder andere Lichtabsorptionspigmente, mit denen Fasern und/oder Faserbündeln des Seilmantels (11) eingefärbt sind, zu erfassen und/oder deren Menge zu bestimmen, und den Lichtabsorptionskoeffizienten und/oder Reflexionsgrads des Seilmantels (2) anhand der erfassten schwarzen und/oder weißen Pigmenten und/oder anderen Lichtabsorptionspigmenten und/oder deren erfaßten Menge zu bestimmen.

3. Vorrichtung nach einem der vorhergehenden Ansprüche, wobei die Anpassvorrichtung dazu ausgebildet ist, bei Bestimmung eines dunkler ausgebildeten Seilmantels (2) eine niedrigere kritische Lastspielzahl einzustellen und bei Bestimmung eines heller ausgebildeten Seilmantels (2) eine höhere kritische Lastspielzahl einzustellen.

4. Vorrichtung nach einem der vorhergehenden Ansprüche, wobei die Anpassvorrichtung dazu ausgebildet ist, bei Bestimmung eines Lichtabsorptionskoeffizienten a > 0,6 oder a > 0,75 für ein schweres Lastkollektiv, bei dem das Faserseil (1) eine Lebensdauer von weniger als 50% der maximalen Lebensdauer, die das Faserseil bei Beanspruchung mit einem in den Wöhlerschen Dauerfestigkeitsbereich führenden Lastkollektiv besitzt, die kritische Lastspielzahl auf weniger als 50% der Lastspielzahl, bei der der Dauerfestigkeitsbereich erreicht wird, festzusetzen und bei Bestimmung eines Lichtabsorptionskoeffizienten von < 0,4 oder < 0,3 für ein leichtes Lastkollektiv, bei dem das Seil eine Lebensdauer von mindestens 75% der maximalen Lebensdauer besitzt, die kritische Lastspielzahl auf 75% oder mehr der Lastspielzahl, bei der der Dauerfestigkeitsbereich erreicht wird, festzusetzen.

5. Hebezeug, insbesondere Kran, mit einem hochfesten Faserseils (1), das einen Seilkern (11), der hochfeste Kunststofffasern oder -litzen (4) umfasst sowie einen den Seilkern (11) umgebenden, verschleißanzeigenden Seilmantel (2) besitzt, sowie mit einer Vorrichtung zum Bestimmen der Ablegereife eines hochfesten Faserseils (1), die gemäß einem der Ansprüche 1 bis 4 ausgebildet ist.

6. Hebezeug nach dem vorhergehenden Anspruch, welches als Kran, insbesondere in Form eines Turmdrehkrans oder eines Teleskopausleger-Krans ausgebildet ist, wobei zumindest ein Hubseil des Krans, an dem ein Lastaufnahmemittel wie Lasthaken angebracht ist, von dem hochfesten Faserseil (1) gebildet ist.

7. Hebezeug nach einem der beiden vorhergehenden Ansprüche, wobei ein hochfester Faserseilsatz umfassend eine Mehrzahl von hochfesten Faserseilen (1) für verschiedene Einsatzbedingungen des Hebezeugs vorgesehen ist, wobei die Faserseile (1) alle jeweils einen Seilkern (11) und einen Seilmantel (2) besitzen, der bestimmungsgemäß schneller verschleißt als der Seilkern (11), wobei die Faserseile (1) ferner gleiche Seildurchmesser, gleiche Seilkerndurchmesser, gleiche Manteldicken, gleiche Faserbündelanordnungen, gleiche Fasermaterialien und eine gleiche Seilzugfestigkeit besitzen, wobei die Seilmäntel (2) der Faserseile (1) unterschiedliche Tageslichtabsorptionskoeffizienten besitzen, wobei ein für verschleißintensivere Einsatzbedingungen bestimmtes Faserseil einen Seilmantel mit höherem Tageslichtabsorptionskoeffizienten als ein für verschleißärmere Einsatzbedingungen bestimmtes Faserseil (1) besitzt, und wobei die Anpassvorrichtung dazu ausgebildet ist, die kritische Lastspielzahl anhand des jeweils eingebauten Faserseils aus dem Faserseilsatz und des jeweils erfaßten Tageslichtabsorptionskoeffizienten einzustellen.

8. Verwendung zumindest eines hochfesten Faserseils (1) aus einem Faserseilsatz umfassend eine Mehrzahl von hochfesten Faserseilen (1) für verschiedene Einsatzbedingungen in einer Hubvorrichtung, insbesondere in einem Kran wie Mobilkran oder Turmdrehkran, wobei ein Faserseil (1), das einen Seilmantel mit vergleichsweise höherem Tageslichtabsorptionskoeffizienten besitzt, in einer Hubvorrichtung, insbesondere Mobil-Teleskopkran, mit verschleißintensiveren Einsatzbedingungen verwendet wird, und/oder ein Faserseil (1), das einen Seilmantel mit vergleichsweise niedrigerem Tageslichtabsorptionskoeffizienten besitzt, in einer Hubvorrichtung, insbesondere Turmdrehkran, mit verschleißärmeren Einsatzbedingungen verwendet wird, wobei die genannte Hubvorrichtung jeweils als Hebezeug gemäß einem der Ansprüche 5 bis 7 ausgebildet ist und die Ablegereife des jeweils verwendeten Faserseils (1) durch die Vorrichtung zum Bestimmen der Ablegereife an dem genannten Hebezeug bestimmt wird.

## Claims

1. Device for determining the discarding maturity of a high-strength fibre rope (1) including a rope core (11) which comprises high-strength plastic fibres or strands (4) and has a rope sheath (2) surrounding the rope core (11) and indicating wear, comprising optical detection means (12) for detecting the damage image of the rope sheath (2) and/or a load collective counter for determining the load cycles to which the high-strength fibre rope (1) is subjected, and a detection apparatus for detecting the light absorption coefficient and/or the degree of reflection of the rope sheath (2), **characterised in that** an adaptation device for adapting the algorithm, with the aid of which the discarding maturity is determined, depending on the detected light absorption coefficient and/or the detected degree of reflection is provided and configured to change the number of critical load cycles, upon reaching of which a discarding maturity signal is output, depending on the detected light absorption coefficient and/or the detected degree of reflection, in such a way that, for a higher degree of light absorption, the number of critical load cycles is set lower than for a comparatively lower light absorption coefficient.

2. Device according to the preceding claim, wherein the detection apparatus is configured to detect black and/or white pigments and/or other light-absorbing pigments with which fibres and/or fibre bundles of the rope sheath (11) are coloured and/or to determine their amount, and to determine the light absorption coefficient and/or the degree of reflection of the rope sheath (2) from the detected black and/or white pigments and/or other light-absorbing pigments and/or their detected amount.

3. Device according to any one of the preceding claims, wherein the adaptation device is configured to set a lower number of critical load cycles when determining a darker configured rope sheath (2) and to set a higher number of critical load cycles when determining a lighter configured rope sheath (2).

4. Device according to any one of the preceding claims, wherein the adaptation device is configured to set, when determining a light absorption coefficient a > 0.6 or a > 0.75 for a heavy load collective at which the fibre rope (1) has a service life of less than 50% of the maximum service life which the fibre rope has when loaded with a load collective leading to the Wöhler fatigue strength range, the number of critical load cycles to less than 50% of the number of load cycles at which the fatigue strength range is reached and, when determining a light absorption coefficient of < 0.4 or < 0.3 for a light load collective at which the rope has a service life of at least 75% of the maximum service life, to set the number of critical load cycles to 75% or more of the number of load cycles at which the fatigue strength range is reached.

5. Hoisting gear, in particular a crane, comprising a high-strength fibre rope (1) including a rope core (11) which comprises high-strength plastic fibres or strands (4) and has a rope sheath (2) surrounding the rope core (11) and indicating wear, and comprising a device for determining the discarding maturity of a high-strength fibre rope (1) which is configured according to any one of claims 1 to 4.

6. Hoisting gear according to the preceding claim, which is configured as a crane, in particular in the form of a rotating tower crane or telescopic jib crane, wherein at least one hoisting rope of the crane, on which a load-receiving means such as a load hook is attached, is formed by the high-strength fibre rope (1).

7. Hoisting gear according to any one of the preceding two claims, wherein a high-strength fibre rope set comprising a plurality of high-strength fibre ropes (1) is provided for different conditions of use of the hoisting gear, wherein the fibre ropes (1) each have a rope core (11) and a rope sheath (2), respectively, which wears faster than the rope core (11) when used as intended, wherein the fibre ropes (1) further have the same rope diameters, the same rope core diameters, the same sheath thicknesses, the same fibre bundle arrangements, the same fibre materials and the same rope tensile strength, wherein the rope sheaths (2) of the fibre ropes (1) have different daylight absorption coefficients, wherein a fibre rope intended for more wear-intensive conditions of use has a rope sheath with a higher daylight absorption coefficient than a fibre rope (1) intended for less wear-intensive conditions of use, and wherein the adaptation device is configured to set the number of critical load cycles on the basis of the respectively installed fibre rope of the fibre rope set and the respectively detected daylight absorption coefficient.

8. Use of at least one high-strength fibre rope (1) of a fibre rope set comprising a plurality of high-strength fibre ropes (1) for different conditions of use in a hoisting device, in particular in a crane such as a mobile crane or a rotating tower crane, wherein a fibre rope (1) which has a rope sheath with a comparatively higher daylight absorption coefficient is used in a hoisting device, in particular a mobile telescopic crane, with more wear-intensive conditions of use, and/or a fibre rope (1) which has a rope sheath with a comparatively lower daylight absorption coefficient is used in a hoisting device, in particular a rotating tower crane, with more wear-intensive conditions of use, wherein the hoisting device is in each case configured as a hoisting gear according to any one of claims 5 to 7, and the discarding maturity of the respectively used fibre rope (1) is determined by the device for determining the discarding maturity on said hoisting gear.

## Revendications

1. Dispositif pour déterminer la maturité de remplacement d'un câble en fibres à haute résistance (1), qui possède une âme de câble (11) comprenant des fibres ou des torons en matière plastique à haute résistance (4) ainsi qu'une gaine de câble (2) entourant l'âme de câble (11), indiquant l'usure, avec des moyens de détection optiques (12) pour détecter l'image d'endommagement de la gaine de câble (2) et/ou un compteur de collectif de charge pour déterminer les cycles de charge auxquels le câble en fibres à haute résistance (1) est soumis, et un appareil de détection pour détecter le coefficient d'absorption de lumière et/ou le degré de réflexion de la gaine de câble (2), **caractérisé en ce qu'**un dispositif d'adaptation pour adapter l'algorithme, à l'aide duquel la maturité de remplacement est déterminée, en fonction du coefficient d'absorption de lumière détecté et/ou du degré de réflexion détecté est prévu et configuré pour modifier le nombre de cycles de charge critique, à l'atteinte duquel un signal de maturité de remplacement est émis, en fonction du coefficient d'absorption de lumière détecté et/ou du degré de réflexion détecté, de telle sorte que, pour un degré d'absorption de lumière plus élevé, le nombre de cycles de charge critique est réglé plus bas que pour un coefficient d'absorption de lumière comparativement plus faible.

2. Dispositif selon la revendication précédente, dans lequel l'appareil de détection est configuré pour détecter des pigments noirs et/ou blancs et/ou d'autres pigments d'absorption de lumière avec lesquels des fibres et/ou des faisceaux de fibres de la gaine de câble (11) sont colorés et/ou pour déterminer leur quantité, et pour déterminer le coefficient d'absorption de lumière et/ou le degré de réflexion de la gaine de câble (2) à partir des pigments noirs et/ou blancs et/ou d'autres pigments d'absorption de lumière détectés et/ou de leur quantité détectée.

3. Dispositif selon l'une quelconque des revendications précédentes, dans lequel le dispositif d'adaptation est configuré pour régler un nombre de cycles de charge critique plus faible lors de la détermination d'une gaine de câble (2) configurée plus foncée et pour régler un nombre de cycles de charge critique plus élevé lors de la détermination d'une gaine de câble (2) configurée plus claire.

4. Dispositif selon l'une quelconque des revendications précédentes, dans lequel le dispositif d'adaptation est configuré pour, lors de la détermination d'un coefficient d'absorption de lumière a > 0,6 ou a > 0,75 pour un collectif de charge lourd, auquel le câble en fibres (1) possède une durée de vie de moins de 50 % de la durée de vie maximale que le câble en fibres possède lors d'une sollicitation avec un collectif de charge entrant dans la plage de résistance à la fatigue de Wöhler, fixer le nombre de cycles de charge critique à moins de 50 % du nombre de cycles de charge auquel la plage de résistance à la fatigue est atteinte et, lors de la détermination d'un coefficient d'absorption de lumière de < 0,4 ou < 0,3 pour un collectif de charge léger, auquel le câble possède une durée de vie d'au moins 75 % de la durée de vie maximale, fixer le nombre de cycles de charge critique à 75 % ou plus du nombre de cycles de charge auquel la plage de résistance à la fatigue est atteinte.

5. Engin de levage, notamment grue, avec un câble en fibres à haute résistance (1), qui possède une âme de câble (11), comprenant des fibres ou des torons en matière plastique à haute résistance (4) ainsi qu'une gaine de câble (2) entourant l'âme de câble (11), indiquant l'usure, ainsi qu'avec un dispositif pour déterminer la maturité de remplacement d'un câble en fibres à haute résistance (1), qui est configuré selon l'une quelconque des revendications 1 à 4.

6. Engin de levage selon la revendication précédente, qui est configuré sous forme de grue, notamment sous la forme d'une grue à tour rotative ou d'une grue à flèche télescopique, au moins un câble de levage de la grue, sur lequel est monté un moyen de réception de charge tel qu'un crochet de charge, étant formé par le câble en fibres à haute résistance (1).

7. Engin de levage selon l'une quelconque des deux revendications précédentes, dans lequel un jeu de câbles en fibres à haute résistance comprenant une pluralité de câbles en fibres à haute résistance (1) est prévu pour différentes conditions d'utilisation de l'engin de levage, les câbles en fibres (1) possédant tous respectivement une âme de câble (11) et une gaine de câble (2), qui s'use conformément plus rapidement que l'âme de câble (11), les câbles en fibres (1) possédant en outre les mêmes diamètres de câble, les mêmes diamètres d'âme de câble, les mêmes épaisseurs de gaine, les mêmes agencements de faisceaux de fibres, les mêmes matériaux de fibres et une même résistance à la traction du câble, les gaines de câble (2) des câbles en fibres (1) possédant des coefficients d'absorption de la lumière du jour différents, un câble en fibres destiné à des conditions d'utilisation plus intensives en termes d'usure possédant une gaine de câble avec un coefficient d'absorption de la lumière du jour plus élevé qu'un câble en fibres (1) destiné à des conditions d'utilisation plus faibles en termes d'usure, et le dispositif d'adaptation étant configuré pour régler le nombre de cycles de charge critique à partir du câble en fibres du jeu de câbles en fibres respectivement installé et du coefficient d'absorption de la lumière du jour respectivement détecté.

8. Utilisation d'au moins un câble en fibres (1) de haute résistance d'un jeu de câbles en fibres comprenant une pluralité de câbles en fibres (1) de haute résistance pour différentes conditions d'utilisation dans un dispositif de levage, notamment dans une grue telle qu'une grue mobile ou une grue à tour rotative, un câble en fibres (1), qui possède une gaine de câble avec un coefficient d'absorption de la lumière du jour comparativement plus élevé, étant utilisé dans un dispositif de levage, notamment une grue mobile télescopique, avec des conditions d'utilisation plus intensives en termes d'usure, et/ou un câble en fibres (1), qui possède une gaine de câble avec un coefficient d'absorption de la lumière du jour comparativement plus faible, étant utilisé dans un dispositif de levage, notamment une grue à tour rotative, avec des conditions d'utilisation plus faibles en termes d'usure, ledit dispositif de levage étant respectivement configuré sous la forme d'un engin de levage selon l'une quelconque des revendications 5 à 7 et la maturité de remplacement du câble en fibres (1) respectivement utilisé étant déterminée par le dispositif de détermination de la maturité de remplacement sur ledit engin de levage.
